# EUROPÄISCHE PATENTSCHRIFT

(11) **EP 1 677 032 B1**
(45) Veröffentlichungstag und Bekanntmachung des Hinweises auf die Patenterteilung: **19.11.2008**
(21) Anmeldenummer: 04031089.8
(22) Anmeldetag: 31.12.2004
(51) Int. Cl.: F16H 57/08

(54) **Planeten-Austauschverfahren und Montagebolzen**
Method to replace the orbital gears and part mounting bolt
Méthode pour remplacer les satellites et boulon de montage

(43) Veröffentlichungstag der Anmeldung: 05.07.2006
(73) Patentinhaber: Eickhoff Maschinenfabrik GmbH, 44789 Bochum (DE)
(72) Erfinder: Albers, Helmut, 59439 Holzwickede (DE); Aust, Rainer, 44879 Bochum (DE); Dombrowski, Wolfhard, 44894 Bochum (DE); Kowalczik, Ingo, 44894 Bochum (DE); Neufelder, Marc, 58452 Witten (DE)
(74) Vertreter: Behrendt, Arne

(56) Entgegenhaltungen:
- DE-A1- 3 711 405
- DE-A1- 10 159 973
- DE-C1- 19 955 516
- PATENT ABSTRACTS OF JAPAN Bd. 2003, Nr. 12, 5. Dezember 2003 (2003-12-05) & JP 2003 269553 A (KANZAKI KOKYUKOKI MFG CO LTD), 25. September 2003 (2003-09-25)
- PATENT ABSTRACTS OF JAPAN Bd. 009, Nr. 223 (M-411), 10. September 1985 (1985-09-10) & JP 60 081540 A (UBE KOSAN KK), 9. Mai 1985 (1985-05-09)

## Beschreibung

Die vorliegende Erfindung betrifft ein Verfahren zum Austausch von Komponenten eines Umlaufrädergetriebes, welches insbesondere in einer Windkraftanlage eingesetzt ist, wobei das Umlaufrädergetriebe die Merkmale aa bis ag des Anspruch 1 aufweist. Ferner betrifft die Erfindung einen Montagebolzen, der sich insbesondere zur Durchführung des Verfahrens eignet.

Umlaufrädergetriebe - auch Planetengetriebe genannt - mit diesen Merkmalen sind seit Jahrzehnten Stand der Technik. Sie werden auch seit längerem in Windkraftanlagen eingesetzt, um die vergleichsweise geringe Drehzahl des Rotors in eine höhere, für den Generator geeignete Drehzahl umzusetzen.

Bekannt ist ein Getriebe für eine Windkraftanlage der eingangs genannten Art aus der gattungsgemäßen DE 101 59 973 A1. Der Planetenstufe dieses vorbekannten Getriebes ist eine zusätzliche Stirnradstufe mit Standrädern nachgeschaltet. Dies ist ein im Windkraftbereich gängiges Getriebekonzept, da Windkraftgetriebe Übersetzungen von bis zu 90 leisten müssen, was bei dem begrenzten Bauraum in der Gondel mit einer einzigen Planetenstufe nur unter Umständen realisierbar ist. Eine Besonderheit des aus der DE 101 59 973 A1 bekannten Getriebes ist die Lagerung der Sonnenwelle. Letztere ist als verzahnte Ritzelwelle ausgeführt, was bedeutet, dass Sonnenrad und Sonnenwelle ein gemeinsames Glied des Getriebes bilden. Die Sonnenwelle ist mit einer axialen Bohrung versehen, durch die eine mit dem Planetenträger verbundene Welle entlang der Hauptachse hindurchgesteckt ist. Auf diese Weise ist das Sonnenrad des vorbekannten Getriebes im Gehäuse drehbar gelagert.

Im Bereich der Planetenstufe ist das Gehäuse des vorbekannten Getriebes durch zwei Trennebenen durchsetzt, die sich normal zur Hauptachse erstrecken und das Getriebegehäuse in drei Sektionen aufteilen: einer antriebsartigen Sektion in Richtung des Rotors, einer mittleren Sektion, die von dem gehäusefestem Hohlrad gebildet wird und einer abtriebsseitigen Sektion in Richtung des Generators. Durch Lösen der Bolzen, welche das Hohlrad mit den beiden benachbarten Sektionen des Gehäuses verbindet, kann das vorbekannte Getriebe in beiden Trennebenen aufgetrennt werden. Die Trennebenen verlaufen somit durch die axialen Seitenflächen des gehäusefesten Hohlrades.

In jüngster Zeit werden mit auffälliger Häufigkeit Schäden an Windkraftanlagen bekannt, die möglicherweise auf Unsicherheiten in der Dimensionierung und/oder Betriebsführung zurückzuführen sind. Die Schäden betreffen unter anderem die Getriebe, die als Kernstück des Antriebsstrangs zwischen Rotor und Generator eingespannt und damit allseits negativen Einflüssen ausgesetzt sind. Die Folgen sind die vorzeitige Ermüdung oder gar der Totalausfall einzelner Komponenten der Getriebe wie Räder und Lager.

Diesen Schadensfällen kann durch Austausch besonders ausfallgefährdeter Komponenten des Getriebes entgegengetreten werden. Anstelle der ursprünglich eingesetzten Komponenten werden modifizierte Austausch-Komponenten eingesetzt, bei deren Dimensionierung negative Erfahrungen der Vergangenheit berücksichtigt werden. Weiterhin ist es möglich, präventive Instandsetzungsmaßnahmen durchzuführen, um den Anlagenwert zu erhalten und Anforderungen aus Versicherungsverträgen zu erfüllen. All diese Maßnahmen müssen möglichst kostengünstig erfolgen.

Der Austausch von einzelnen Komponenten eines Windkraftgetriebes ist jedoch durch seine exponierte Lage mit kostentreibenden Schwierigkeiten verbunden. So erfordert der Ersatz eines Planetenrades bisher den Werkstattaufenthalt des Getriebes, was wiederum seine Demontage und anschließende Remontage bedingt. Hierfür muss die Anlage teilweise wochenlang stillgesetzt und ein externer Mobilkran beschafft werden, mit welchem das aus dem Antriebsstrang entnommene Getriebe vom Turm zu heben ist. Bei einigen Anlagen muss zudem der Rotor abgenommen werden, da dieser teilweise im Getriebe gelagert ist. Die hieraus erwachsenden Instandsetzungskosten erreichen Dimensionen, die den Austausch schadensbedrohter oder bereits geschädigter Komponenten vor dem Hintergrund der ohnehin geringen Erträge einer Windkraftanlage unwirtschaftlich erscheinen lassen.

Die DE 199 55 516 C1 schlägt eine Windkraftanlage vor, die zum einen über einen besonders hubstarken Bordkran verfügt und zum anderen über eine großflächige Öffnung im Boden der Gondel aufweist. Beides gestattet es, schwere und sperrige Aggregate des Antriebsstranges wie das Getriebe ohne Zuhilfenahme eines externen Mobilkranes von dem Turm herabzulassen und anschließend wieder hinaufzuziehen. Derartige Windkraftanlagen haben bisher noch keine nennenswerte Verbreitung gefunden. Vielmehr müssen vorwiegend ältere Anlagen instand gesetzt werden, die über einen ausreichend leistungsstarken Bordkran nicht verfügen und deren Öffnung im Gondelboden allenfalls einen Quadratmeter misst, was für eine Hindurchführung des Getriebes bei weitem nicht ausreicht.

Der vorliegenden Erfindung liegt daher die Aufgabe zugrunde, ein Verfahren anzugeben, welches es ermöglicht, Komponenten von Windkraftgetrieben in der Gondel auszutauschen. Hierdurch sollen kostentreibende Demontagen und Werkstattaufenthalte des Getriebes vermieden werden.

Gelöst wird diese Aufgabe durch ein Verfahren mit den Schritten ba bis bo des Anspruch 1, welches sich auf Getriebe mit den Merkmalen aa bis ag anwenden lässt.

Das erfindungsgemäße Verfahren beruht auf der Grundidee, das Getriebe abwechselnd in einer der beiden Trennebenen aufzutrennen, um an die auszutauschenden Komponenten problemlos heranzukommen. Die mittlere Sektion des Gehäuses ist stets mit mindestens einem der beiden äußeren Sektionen verbunden und braucht deswegen nicht von einem Hebezeug getragen werden. Die Durchführung des Verfahrens setzt voraus, dass die abtriebsseitige Sektion gegenüber dem Maschinenrahmen und der darin gelagerten antriebsseitigen Sektion beweglich ist. Nach Abschlagen des generatorseitigen Abschnitts des Antriebsstranges und dem Auftrennen des Gehäuses in einer Trennebene ist dies der Fall. Damit die abtriebsseitige Sektion des Getriebes nicht auf den Maschinenrahmen herab fällt, ist es bei einigen Anlagen notwendig, die abtriebsseitige Sektion mit einer geeigneten Haltevorrichtung zu halten. Als Haltevorrichtung eignen sich unter Umständen die in vielen Gondeln installierten Bordkräne.

Das in Vorschlag gebrachte Verfahren ermöglicht es, die vergleichsweise einfach transportablen Komponenten eines Windkraftgetriebes auszutauschen, ohne hierfür die schwergewichtigen und sperrigen Gehäuseteile vom Turm herabheben zu müssen. Insofern ist das vorliegende Verfahren auch nicht auf die in der DE 199 55 516 C1 beschriebene, großflächige Öffnung im Boden der Gondel angewiesen.

Nicht in allen Windkraftanlagen sind Bordkräne installiert, deren Tragfähigkeit zur Durchführung des vorliegenden Verfahrens genügt. Auch erreichen die Planeten von Getrieben der höheren Leistungsklasse Gewichte von etwa 500 kg, so dass sie von den Monteuren nicht mehr mit der gebotenen Sicherheit und Genauigkeit gehalten werden können. In solchen Windkraftanlagen bietet es sich an, das Verfahren unter Zuhilfenahme einer Linearführung durchzuführen, die zwischen der abtriebsseitigen Sektion des Gehäuses und dem Maschinenrahmen angebracht wird, die sich parallel zur Hauptachse erstreckt und entlang derer bei aufgetrenntem Gehäuse die abtriebsseitige Sektion relativ zu dem Maschinenrahmen beweglich ist. Zwar muss diese Linearführung eigens auf die Gondel gehievt werden, jedoch gestattet sie eine recht unkomplizierte und schnelle Handhabung der aufgetrennten Gehäusesektionen. Diese werden entlang der Hauptachse geführt und bleiben so stets in Flucht. Ein möglicherweise auf der Gondel vorhandener Bordkran bleibt bei Verwendung der Linearführung frei und kann zum Heben und Positionieren der auszutauschenden Komponenten verwendet werden.

Das Verfahren wird vorzugsweise mit Hilfe eines Montagebolzens durchgeführt, der die Merkmale des a bis h des Anspruchs 3 aufweist. Dieser Montagebolzen wird temporär anstelle des Planetenbolzens in den Planetenträger eingesetzt und taugt auch für den Einsatz in Platenträgern, in denen die Planetenbolzen beidseitig abgestützt sind und daher nur in radialer Richtung entnommen werden können. Grundsätzlich ist dieser Montagebolzen auch außerhalb des beschriebenen Verfahrens an Getrieben mit oder ohne Umlaufräder vorteilhaft einsetzbar.

Der Montagebolzen wird mit einer Gewindebohrung an einer Stirnfläche des Lagerstücks und/oder des Wangestücks zweckmäßig weitergebildet. In eine solche Gewindebohrung kann vorübergehend eine Augenschraube eingedreht werden, die das Handling des Montagebolzens erleichtert.

Sofern der Planetenbolzen beidseitig in dem Planetenträger abgestützt ist, ist es zweckdienlich, ein zweites Wangenstück vorzusehen.

Das zweites Wangenstück kann gewichtssparend eine geringere axiale Stärke aufweisen als das erste, da es vornehmlich zum Zentrieren des Rades benötigt wird und keine großen Kräfte aufnehmen muss.

Der Stift wird vorzugsweise endseitig mit einer Keilfläche versehen, damit er besser in die Bohrungen eingeführt werden kann.

Die vorliegende Erfindung soll nun anhand von Zeichnungen näher erläutert werden. In den Zeichnungen ist der Antriebsstrang einer Windkraftanlage einschließlich des Getriebes symbolisch abstrahiert dargestellt. Aus der beiliegenden Tafel geht hervor, in welchen Figuren die einzelnen Verfahrensschritte dargestellt sind. Es zeigen im Einzelnen:
- Fig. 1:: Getriebeübersicht (Stand der Technik);
- Fig. 2a - 2m:: Verfahren nach Anspruch 1;
- Fig. 3a - 3j:: Teilschritte des Verfahrens unter Verwendung eines Montagebolzens nach Anspruch 3;
- Figur 4a:: Montagebolzen, fluchtend;
- Figur 4b:: Montagebolzen, exzentrisch;
- Figur 4c:: Montagebolzen, getrennt;
- Tafel 1:: Verknüpfung der Merkmale des Anspruch 1 mit den Figuren.

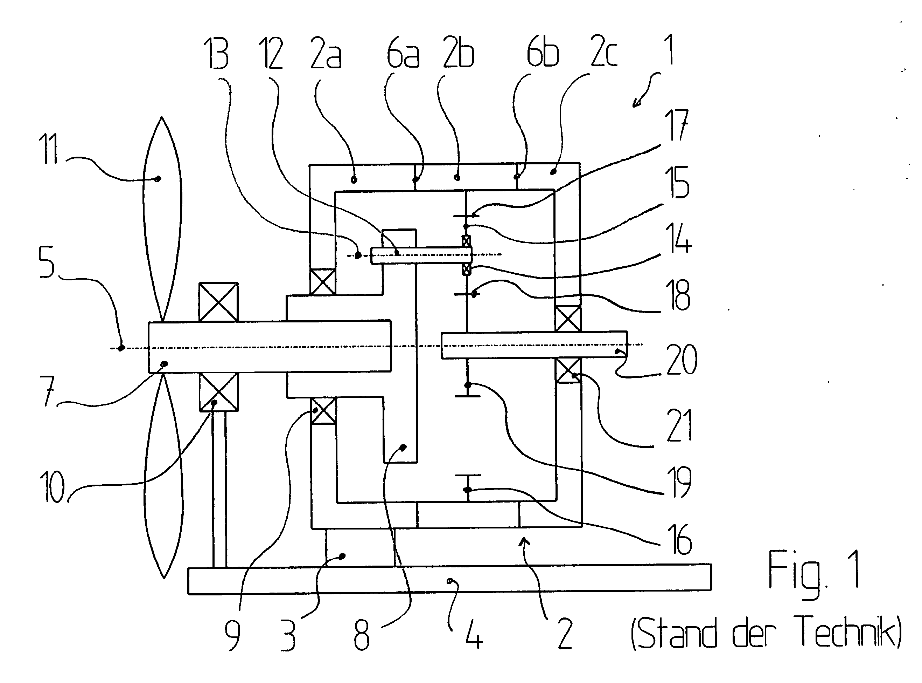

Figur 1 zeigt den prinzipiellen Aufbau eines in einer Windkraftanlage einsetzbaren Umlaufrädergetriebes 1 der eingangs genannten Gattung. Es wird nachstehend kurz als Getriebe 1 bezeichnet und umfasst ein Gehäuse 2, welches sich aus drei Sektionen, einer antriebsseitigen Sektion 2a, einer mittleren Sektion 2b und einer abtriebsseitigen Sektion 2c zusammensetzt. Über ein Gehäuselager 3 ist die antriebsseitige Sektion 2a mit einem Maschinenrahmen 4 fest verbunden. Die drei Sektionen 2a, 2b, 2c erstrecken sich entlang einer Hauptachse 5 des Getriebes 1 und stoßen in zwei normal zur Hauptachse 5 ausgerichteten Trennebenen 6a, 6b zusammen. In den Trennebenen 6a, 6b sind die jeweiligen benachbarten Sektionen 2a, 2b, 2c mit nicht dargestellten Bolzen lösbar miteinander verschraubt.

Der Antrieb des Getriebes 1 erfolgt von einer Rotorwelle 7 auf einen Planetenträger 8, der mittels eines Planetenträgerlagers 9 in der antriebsseitigen Sektion 2a um die Hauptachse 5 drehbar gelagert ist. Die Rotorwelle 7 ist ihrerseits in einem Rotorlager 10 um die Hauptachse 5 drehbar gelagert und wird von dem im Wind stehenden Rotor 11 in Bewegung versetzt. Zusätzlich sind Rotor 11 und Rotorwelle 7 über das Planetenträgerlager 9 und das Gehäuselager 3 indirekt gelagert. Da in der Realität zwei Gehäuselager 3 vorhanden sind, die beiderseits der Hauptachse 5, gegenüberliegend des Getriebes 1 angeordnet sind, spricht man von einer so genannten Drei-Punkt-Lagerung des Rotors 11.

Der Planetenträger 8 weist mindestens einen Planetenbolzen 12 auf, welcher sich entlang einer zur Hauptachse 5 parallelen, planetenträgerfesten Planetenachse 13 erstreckt. Der Planetenbolzen 12 ist in den Planetenträger 8 eingeschrumpft und bleibt daher bei gewöhnlichem Betrieb gegenüber dem Planetenträger 8 unbewegt. Der Planetenbolzen 12 kann - wie gezeichnet - fliegend im Planetenträger 8 gelagert sein oder auch beidseitig. Mittels eines Planetenlagers 14 ist auf dem Planetenbolzen 12 ein Planetenrad 15 koaxial zur Planetenachse 13 gelagert. Das Planetenrad 15 kann grad- oder schrägverzahnt sein. In der Realität weisen Windkraftgetriebe eine Mehrzahl von Planetenrädern mit Bolzen und Lagern auf, meist drei. Der Einfachheit halber ist in den vorliegenden Zeichnungen jeweils nur ein Planetenrad 15 nebst Planetenbolzen 12, Planetenachse 13 und Planetenlager 14 dargestellt.

Bestandteil der mittleren Sektion 2b ein Hohlrad 16, es ist folglich gehäusefest. Planetenrad 15 und Hohlrad 16 kämmen gemeinsam in einem ersten Zahneingriff 17. Bei Antrieb des Planetenträgers 8 führt das Planetenrad 15 eine Planetenbewegung aus, die sich aus der Überlagerung einer ersten Drehbewegung um die Planetenachse 13 und einer zweiten Drehbewegung um die Hauptachse 5 ergibt.

Über einen zweiten Zahneingriff kämmt das Planetenrad 15 mit einem Sonnenrad 19. Das Sonnenrad 19 ist integraler Bestandteil einer Sonnenwelle 20, die über ein Sonnenlager 21 in der abtriebsseitigen Sektion 2c koaxial zur Hauptachse 5 drehbar gelagert ist. Sonnenwelle 20 und Sonnenrad 19 können auch als getrennte, jedoch drehfest miteinander verbundene Komponenten gestaltet sein. Die Planetenbewegung des Planetenrades 15 wird in eine einfache Rotationsbewegung von Sonnenrades 19 und Sonnenwelle 20 um die Hauptachse 5 umgesetzt.

Viele Windkraftgetriebe verfügen über eine der Umlaufräderstufe nachgeschalteten Stirnradstufe mit Standrädern. Der Antrieb einer etwaigen Stirnradstufe würde über die Sonnenwelle 20 erfolgen. Für die Erläuterung und Ausführung des erfindungsgemäßen Verfahrens ist die Stirnradstufe unnötig, weswegen zum Zwecke der Übersichtlichkeit auf ihre Darstellung verzichtet wurde. Ebenso wenig ist der dem Getriebe 1 nachgeordnete Antriebsstrang gezeichnet, der sich zum ebenfalls nicht dargestellten Generator hin erstreckt.

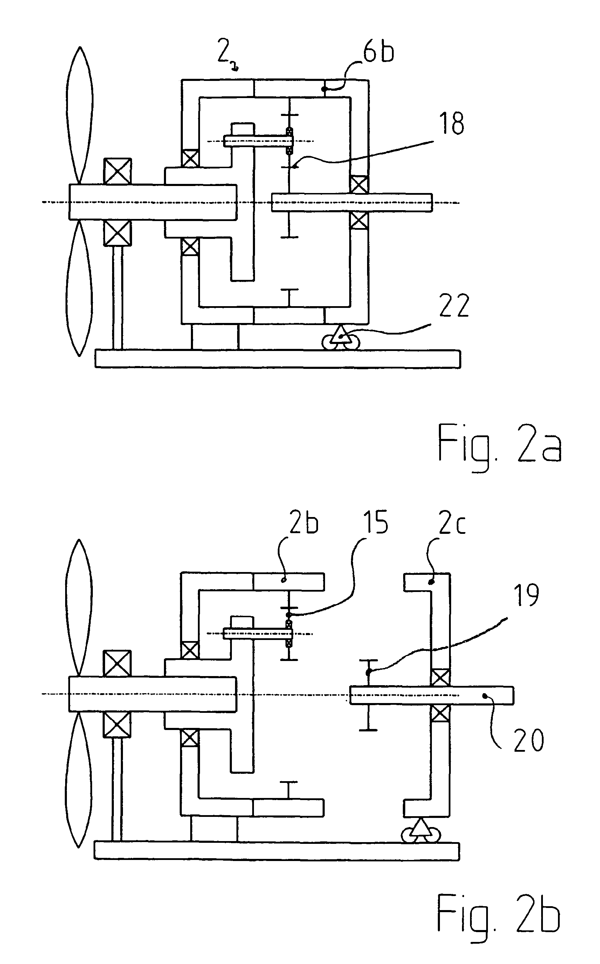

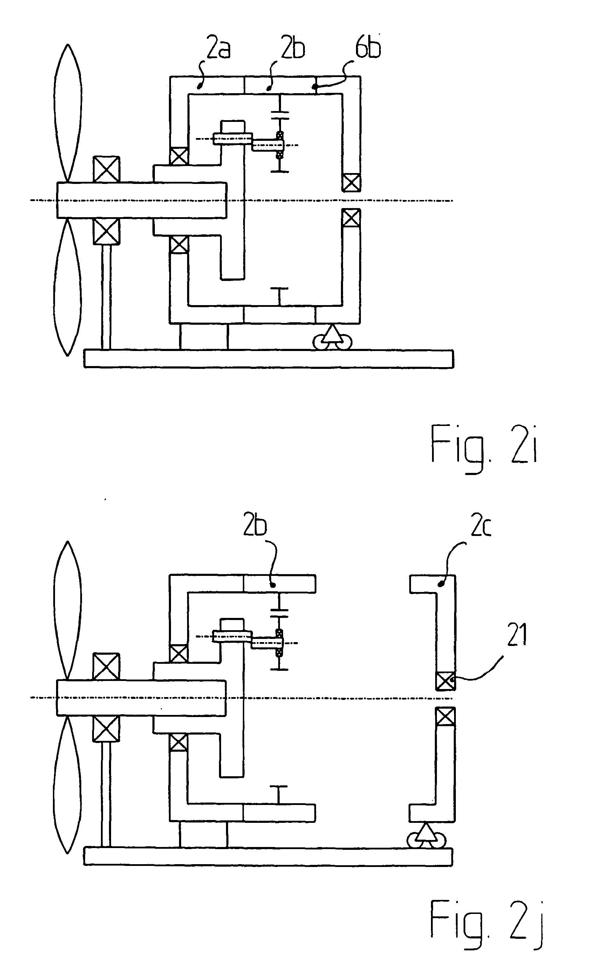

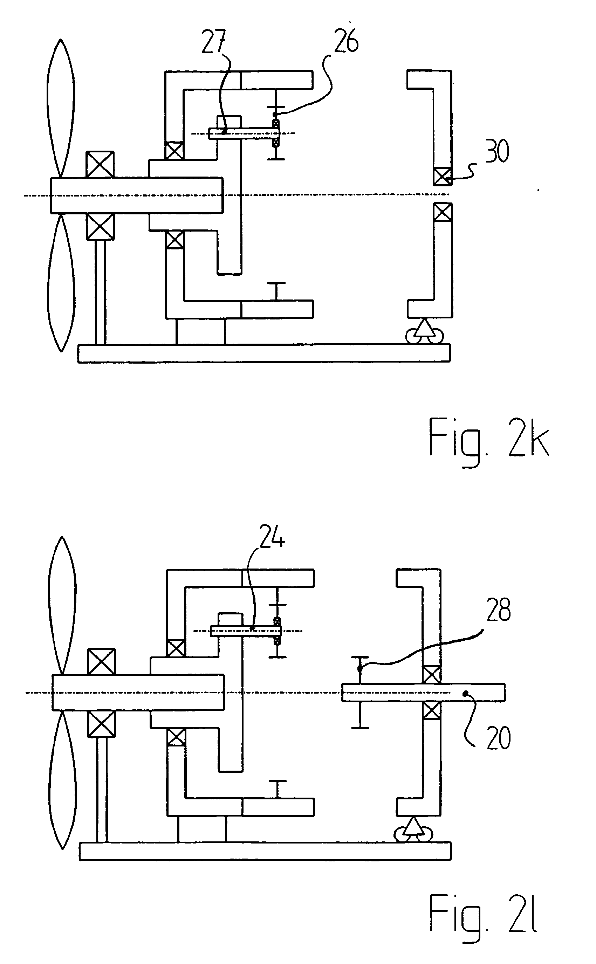

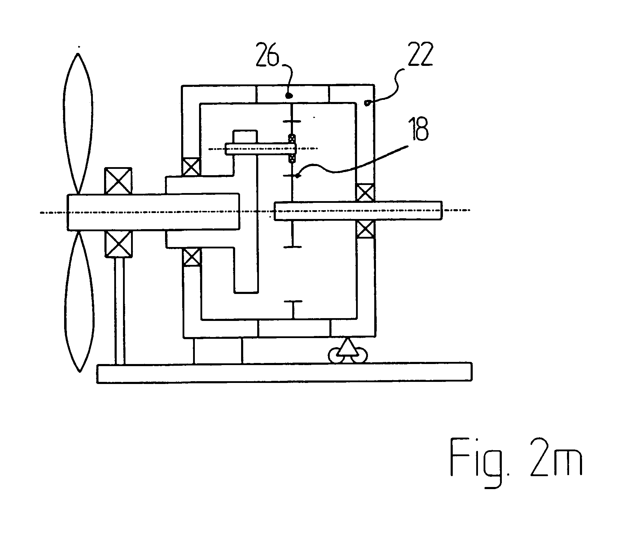

Anhand der Figuren 2a bis 2m soll nun der prinzipielle Ablauf des erfindungsgemäßen Verfahrens erläutert werden. Zunächst wird zwischen der abtriebsseitigen Sektion 2c und dem Maschinenrahmen 4 eine Linearführung 22 montiert, welche es gestattet, die abtriebsseitige Sektion 2c entlang der Hauptachse 5 zu verschieben (Fig. 2a). In der Praxis eignet sich zur Gestaltung der Linearführung 22 eine Art "Rollschuh", der an der abtriebsseitigen Sektion 2c des Gehäuses 2 befestigt wird und auf der Oberseite des Maschinenrahmens 4 entlang rollt. Eine derartige Linearführung kann kostengünstig hergestellt werden und ist leicht auf die Gondel zu transportieren.

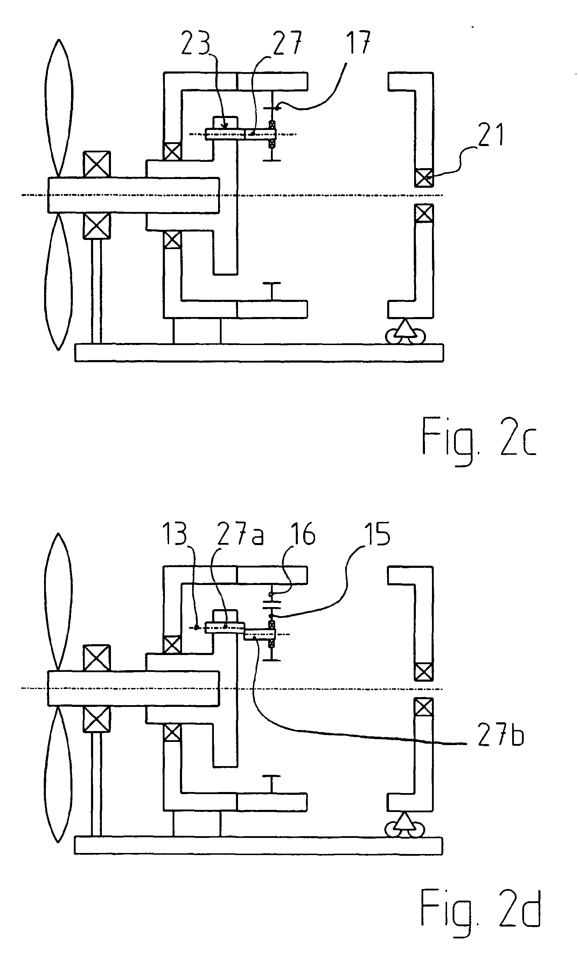

Nach erfolgter Montage der Linearführung 22 wird das Gehäuse 2 in der Trennebene 6b zwischen mittlerer 2b und abtriebsseitiger Sektion 2c durch Lösen der nicht dargestellten Bolzen aufgetrennt und mittels der Linearführung 22 entlang der Hauptachse 5 auseinander gefahren (Fig. 2b). Der zweite Zahneingriff 18 zwischen Planetenrad 15 und Sonnenrad 19 wird dadurch gelöst. Das Sonnenrad 19 wird nun mit oder ohne der Sonnenwelle 20 aus dem Gehäuse 2 entnommen (Fig. 2c).

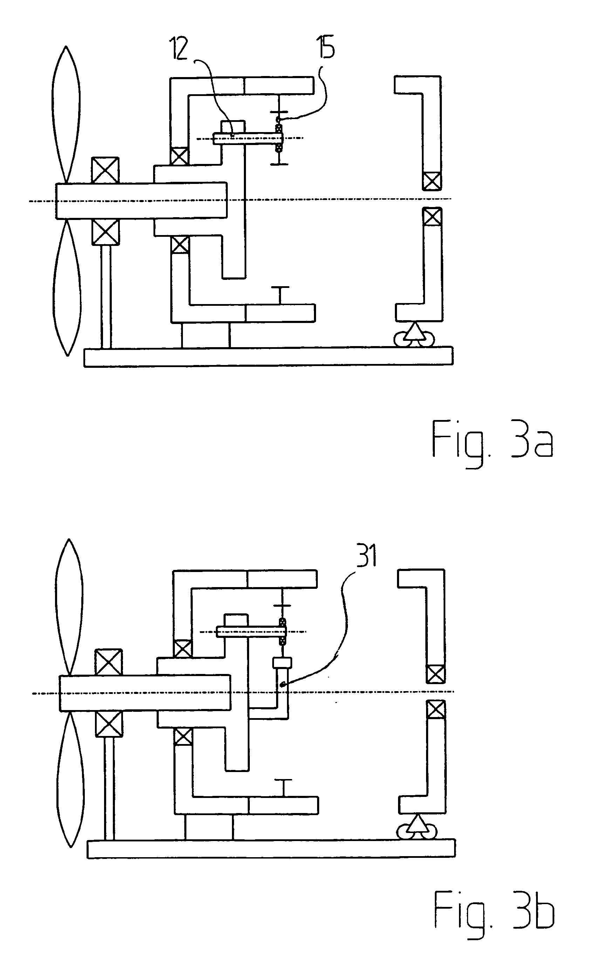

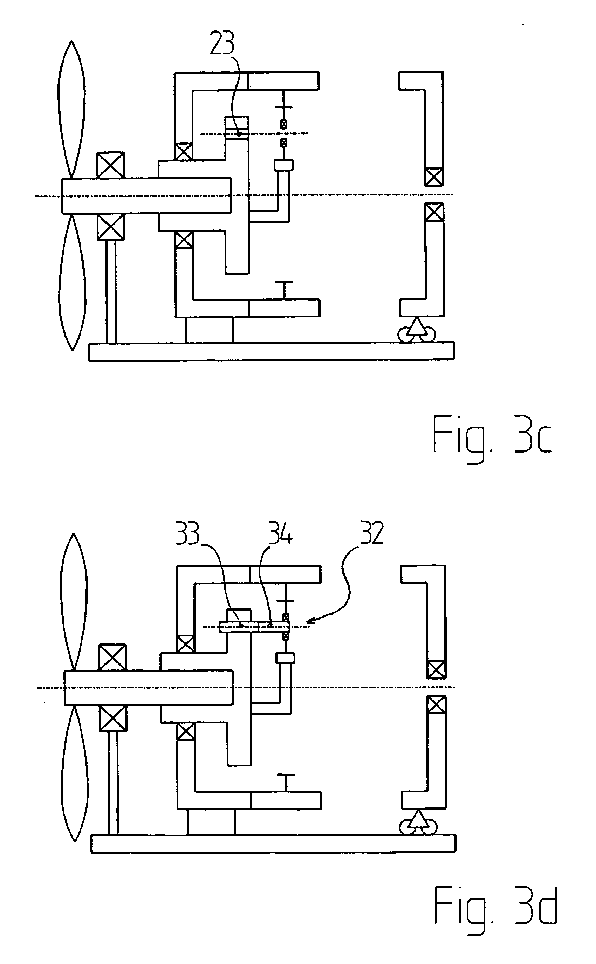

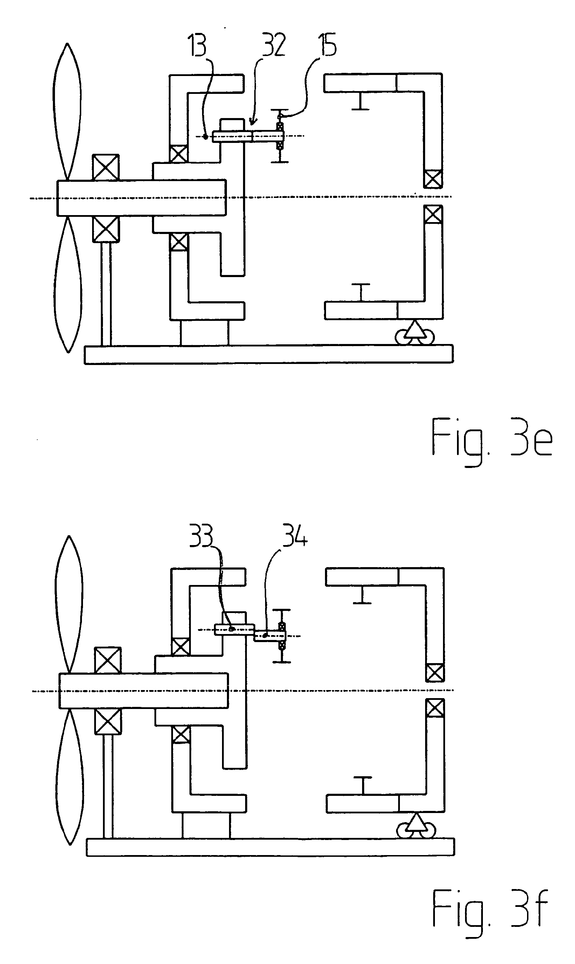

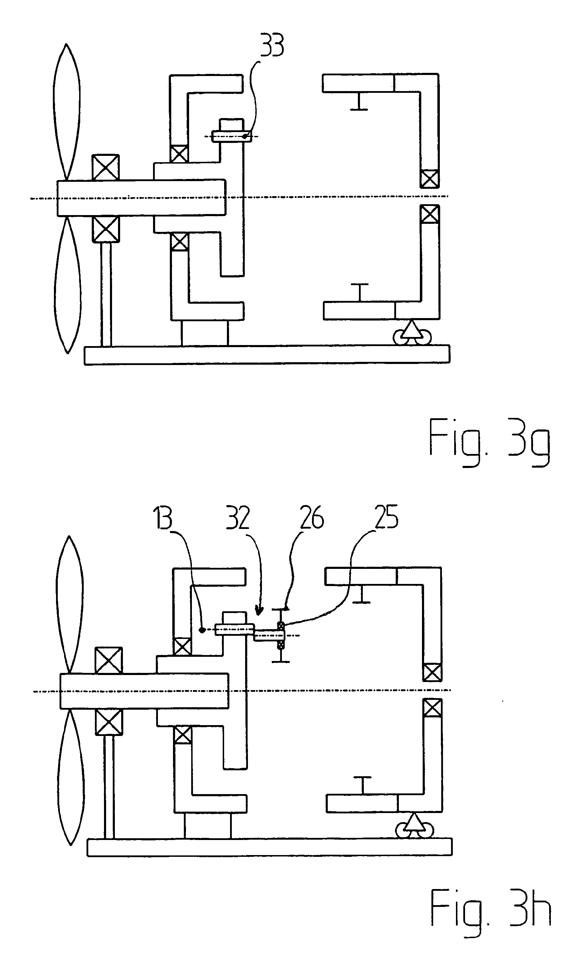

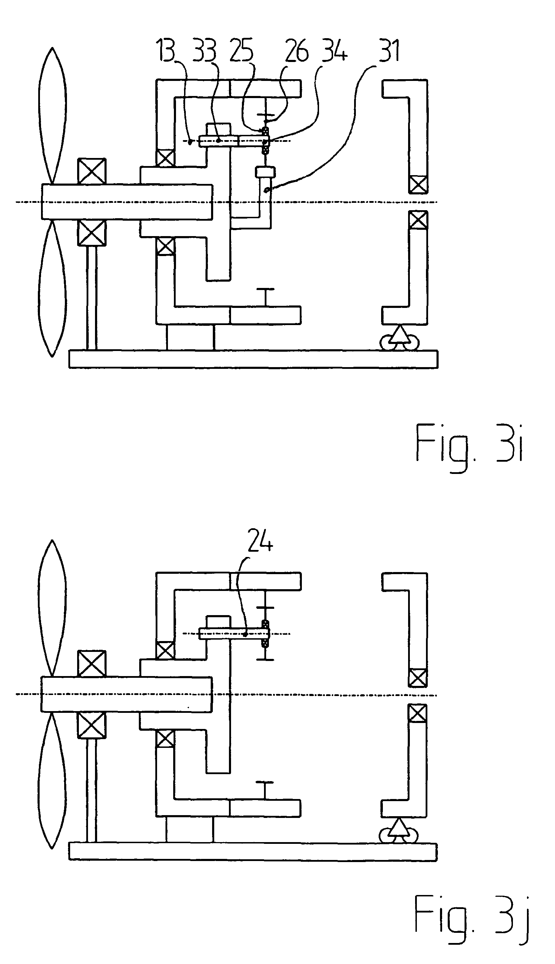

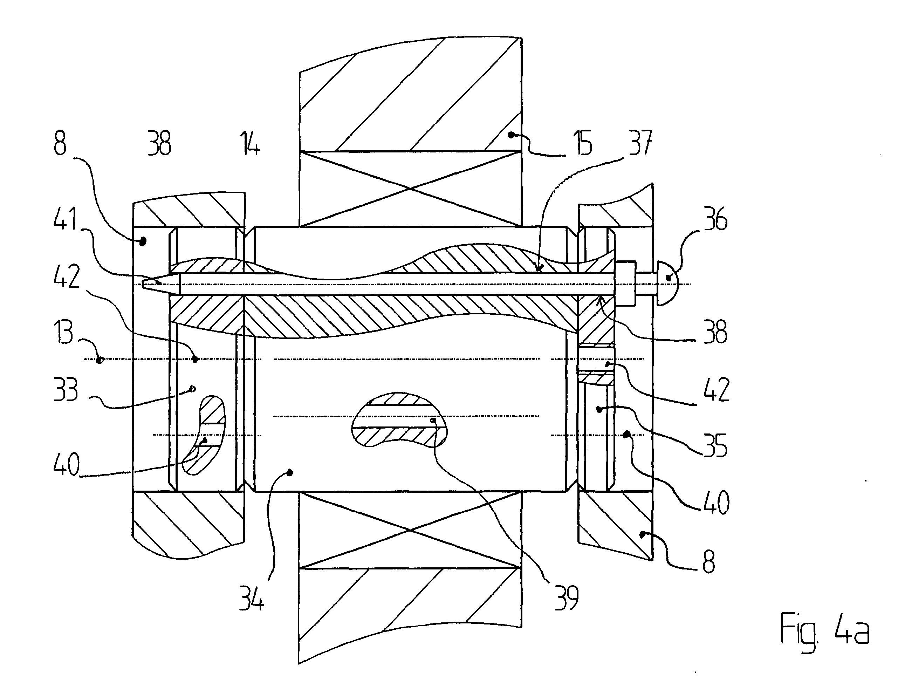

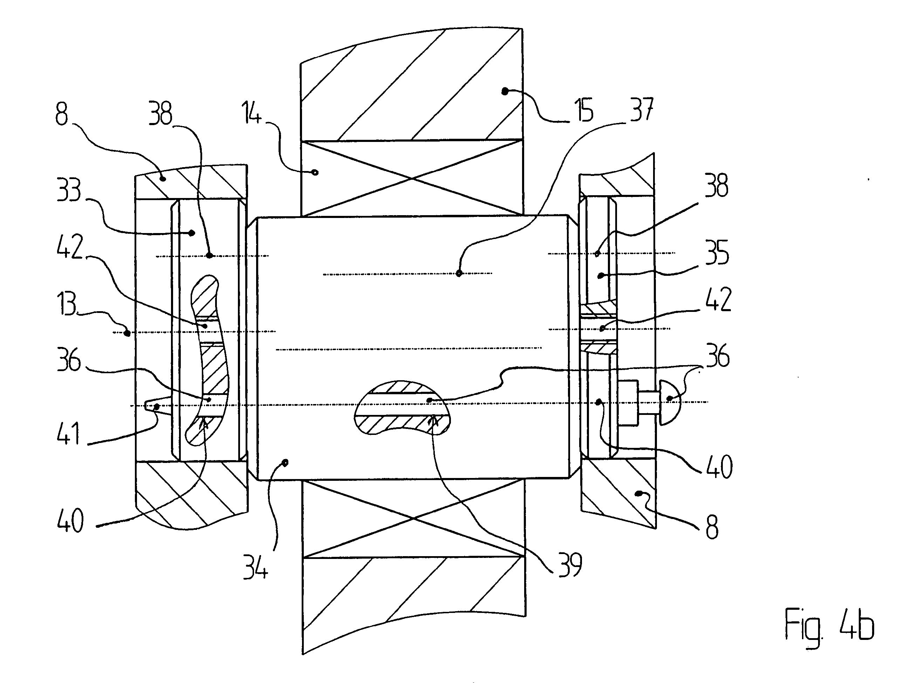

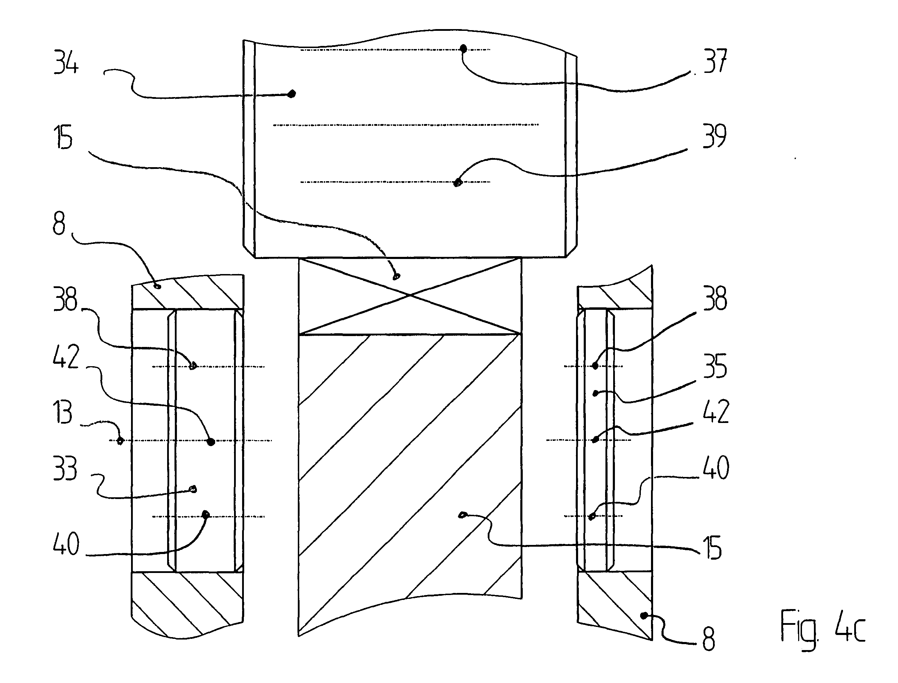

Nun gilt es, auch den ersten Zahneingriff 17 zwischen Planetenrad 15 und Hohlrad 16 zu lösen. Hierzu soll das Planetenrad 15 parallel zu der Planetenachse 13 versetzt werden (Fig. 2d). Das Parallelversetzen des Planetenrades 15 gegenüber der Planetenachse 13 kann in der Praxis durch Langloch-Planetenbuchsen, durch einen in den Figuren 2c bis 2k dargestellten, einteiligen Exzenterbolzen 27 oder durch einen in den Figuren 3 und 4 dargestellten, zweigeteilten Montagebolzen 32 realisiert werden.

Langloch-Planetenbuchsen verlaufen radial zu der Hauptachse 5 durch den Planetenträger 8 und nehmen zylindrische Planetenbolzen 12 auf. Durch geeignete Klemmmittel wird der zylindrische Planetenbolzen 12 in der Langloch-Planetenbuchse positioniert. Eine solche Konstellation ist aus der GB 267 733 A bekannt.

Alternativ kann in eine zylindrische Planetenbuchse 23 ein Exenterbolzen 27 eingesetzt werden (Fig. 2c). Der Exzenterbolzen 27 umfasst mindestens zwei parallel versetzte, zylindrische Abschnitte 27a, 27b, von denen der erste zylindrische Abschnitt 27a in die zylindrische Planetenbuchse 23 eingesetzt und auf dessen zweiten Abschnitt 27b das Planetenrad 15 gelagert wird. Durch Drehen des ersten Abschnitts 27a um die Planetenachse 13 herum kann der zweite Abschnitt 27b aus einer fluchtenden Lage (Fig. 2c) in eine exzentrische Lage (Fig. 2d) versetzt werden. Der Exzenterbolzen 27 wird entweder werksseitig mit dem Getriebe 1 ausgeliefert oder lediglich temporär für das Planeten-Austauschverfahren in dem Planetenträger 8 an Stelle eines zylindrischen Planetenbolzens 12 eingesetzt. Ein geeigneter Exzenterbolzen wird beispielsweise in der DE 37 11 405 C2 offenbart.

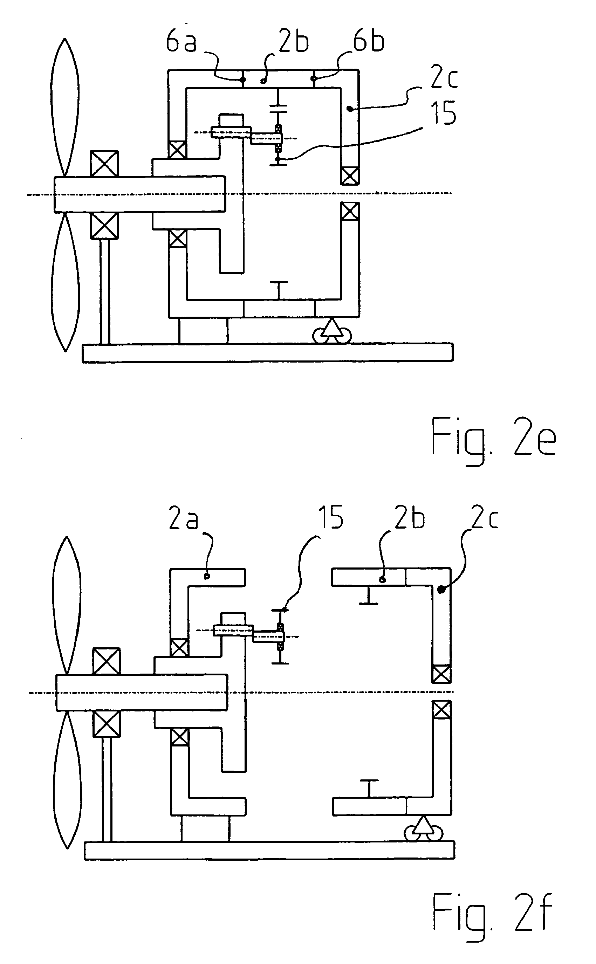

Nach dem Parallelversetzten des Planetenrades 15 wird das Gehäuse 2 durch Zusammenfügen von mittlerer Sektion 2b und abtriebsseitiger Sektion 2c wieder geschlossen (Fig. 2e). Aus Figur 2e ist ersichtlich, warum das Sonnenrad 19 bzw. auch die Sonnenwelle 20 zuvor (in Figur 2c) entfernt wurde: Beim Zusammenfügen von mittlerer Sektion 2b und abtriebsseitiger Sektion 2c würde das Sonnenrad mit dem parallel versetzten Planetenrad 15 kollidieren.

Nach Verschrauben der Trennebene 6b kann das Gehäuse 2 in der Trennebene 6a geöffnet werden. Die mittlere Sektion 2b kann nun zusammen mit der abtriebsseitigen Sektion 2c von der über das Gehäuselager 3 mit dem Maschinenrahmen 4 verbundenen antriebsseitigen Sektion 2a fortbewegt werden (Fig. 2f).

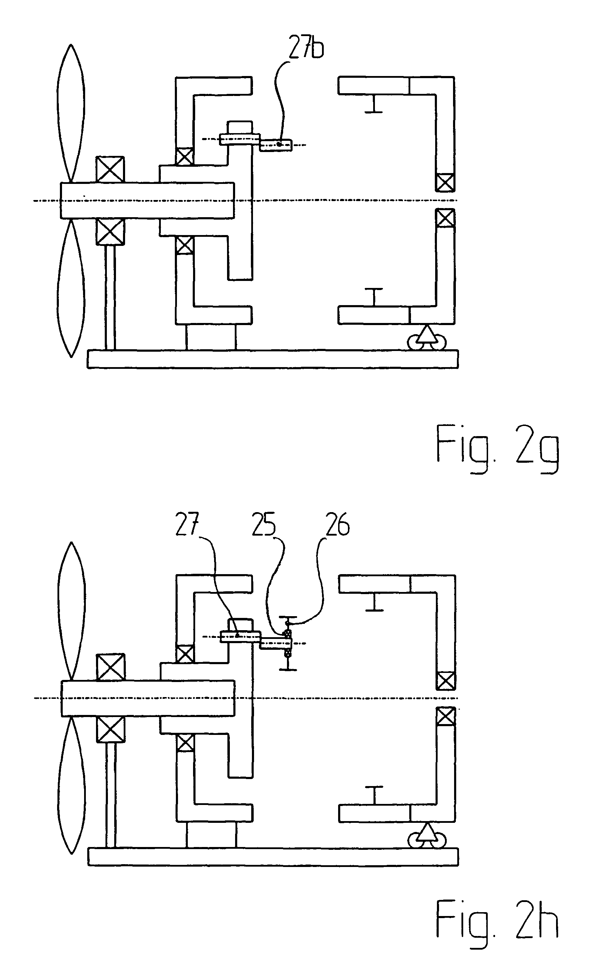

Das Planetenrad 15 ist nun gut zugänglich und kann von dem zweiten Abschnitt des Exzenterbolzens 27b entfernt werden (Fig. 2g). Anschließend wird ein Austausch-Planetenrad 26 zusammen mit einem Austausch-Planetenlager 25 auf den Exzenterbolzen 27 aufgesetzt (Fig. 2h).

Da das Gehäuse 2 im Bereich des Planetenrades 15 sehr weit geöffnet ist (Figuren 2f bis 2h), ist der Arbeitsraum für die Monteure gut zugänglich. Auch können schwerere Planetenräder 15, 26 mit Hilfe des Bordkrans vertikal ein- und ausgesetzt werden, da das Gehäuse 2 oberhalb der Position des Planetenrades 15 geöffnet ist.

Geschlossen wird das Getriebe 1 in umgekehrter Reihenfolge, s. Figuren 2i bis 2m. Gegebenenfalls wird der Exzenterbolzen 27 zwischenzeitlich gegen einen Austauch-Planetenbolzen 24 sowie das Sonnenrad 19 gegen ein entsprechendes Austausch-Sonnenrad 28 ersetzt (Fig. 21). Auch ist bei dieser Gelegenheit die Sonnenwelle 20, das Sonnenlager 21 oder sogar die komplette, hier nicht dargestellte Stirnradstufe austauschbar.

In den Figuren 3a bis 3j wird die Durchführung des Verfahrens unter Verwendung eines speziellen, zweiteiligen Montagebolzens 32 illustriert. Nach Öffnen der zweiten Trennebene 6b und Entfernen des Sonnenrades 19 (Fig. 3a) wird das Planetenrad 15 mit einer Stütze 31 gegenüber dem Planetenträger 8 abgestützt (Fig. 3b). Alsdann wird der Planetenbolzen 12 entfernt (Fig. 3c) und gegen einen Montagebolzen 32 ersetzt (Fig. 3d).

Der Montagebolzen 32 umfasst ein dem Planetenträger 8 zugeordnetes Wangenstück 33 und ein dem Planetenrad 15 zugeordnetes Lagerstück 34. Das Wangenstück 33 ist in den Planetenträger 8 einsteckbar, auf dem Lagerstück 34 ist das Planetenrad 15 mit seinem Planetenlager 14 gelagert. Der Montagebolzen 32 gestattet es wahlweise, das Lagerstück 34 gegenüber dem Wangenstück 33 parallel zu versetzen oder diese beiden Abschnitte 33, 34 koaxial zueinander anzuordnen, sodass das Planetenrad 15 wahlweise koaxial oder parallel versetzt zu der Planetenachse 13 positionierbar ist. Des Weiteren ist der Montagebolzen 32 auftrennbar, sodass das Planetenrad 15 zusammen mit dem Lagerstück 34 in radialer Richtung zur Hauptachse 5 aus dem Planetenträger 8 entfernbar ist, währenddessen das Wangenstück 33 in dem Planetenträger 8 eingesetzt verbleibt (Fig. 3g). Ein geeigneter Montagebolzen wird später genauer beschrieben.

Beim Entfernen des Planetenrades 15 zusammen mit dem Lagerstück 34 (Fig. 3g) ist die mittlere Sektion 2b des Gehäuses 2 an der abtriebsseitigen Sektion 2c befestigt, sodass der vertikale Transport der Komponenten mit Hilfe eines Krans problemlos möglich ist. Geschlossen wird das Getriebe 1 in umgekehrter Reihenfolge, der Montagebolzen 32 wird, wie in Figur 3j dargestellt, durch einen Austausch-Planetenbolzen 24 ersetzt.

Das erfindungsgemäße Verfahren wurde am Beispiel eines Umlaufrädergetriebes 1 einer Windkraftanlage beschrieben. Es kann vorteilhaft auch auf andere Getriebe angewendet werden, die nur unter Schwierigkeiten zugänglich sind.

Die Figuren 4a und 4b zeigen einen Montagebolzen 32, der zur Durchführung des erfindungsgemäßen Verfahrens und für andere Montagearbeiten an Getrieben verwendbar ist. Der Montagebolzen 32 wird anstelle eines herkömmlichen Planetenbolzens 12 eingesetzt. Er besteht aus drei getrennten Abschnitten, nämlich einem ersten Wangenstück 33, einem Lagerstück 34 und einem zweiten, nur in den Figuren 4 dargestellten Wangenstück 35. Bei den Stücken 33, 34, 35 handelt es sich um zylindrische Körper mit einem gemeinsamen Durchmesser. Die beiden Wangenstücke 33, 35 umschließen das Lagerstück 34 beidseitig.

Die Wangenstücke 33, 35 sind dafür bestimmt, in ein Getriebeglied, wie beispielsweise in einen Planetenträger 8 eingesetzt zu werden, auf dem Lagerstück 34 findet ein Planetenlager 14 mit einem Planetenrad 15 Platz.

Der Montagebolzen 32 kann in zwei unterschiedlichen Positionen montiert werden, nämlich einer in Figur 4a dargestellten, fluchtenden Position und in einer, in Figur 4b dargestellten, exzentrischen Position. Die jeweilige Position des Montagebolzens 32 wird mit Hilfe eines Stifts 36 bestimmt, indem dieser in unterschiedliche Bohrungen eingesteckt wird.

Das Lagerstück 34 ist mit einer Lager-Fluchtbohrung 37 versehen, die sich axial durch das Lagerstück 34 hindurch erstreckt. In beiden Wangenstücken 33, 35 sind Wangen-Fluchtbohrungen 38 eingebracht, welche mit der Lager-Fluchtbohrung 37 fluchten, sofern die drei Teilstücke 33, 34, 35 des Montagebolzens 32 konzentrisch zueinander angeordnet sind. Diese in Figur 4a dargestellte Anordnung wird erreicht, indem der Stift 36 durch die Fluchtbohrungen 37, 38 hindurchgesteckt wird.

Der Montagebolzen 32 gestattet es, das Lagerstück 34 in radialer Richtung parallel zu den Wagenstücken 33, 34 zu versetzen; vgl. Figur 4b. Hierzu ist das Lagerstück 34 mit einer Lager-Exzenterbohrung 39 und die Wangenstücke 33, 35 jeweils mit einer Wangen-Exzenterbohrung 40 versehen. Die Exzenterbohrungen 39, 40 fluchten bei parallel versetztem Lagerstück 34. Um diesen Zustand zu erreichen, wird der Stift 36 in eine Wangen-Exzenterbohrung 40 eingeführt und durch die Lager-Exzenterbohrung 39 hindurch geschoben, bis der Stift 36 auch in die andere Wangen-Exzenterbohrung 40 eintritt.

Beim Einfädeln des Stifts 36 hilft eine Keilfläche 41, die endseitig am Stift 36 angeordnet ist und das Wangenstück 33 beim Einführen parallel versetzt.

Wenn der Stift 36 vollständig aus dem Montagebolzen 32 entnommen ist, kann das Lagerstück 34 zusammen mit dem darauf angeordneten Planetenlager 14 und dem Planetenrad 15 aus dem Planetenträger 8 in radialer Richtung entfernt werden (Fig. 4c). Die Wangenstücke 33, 35 verbleiben in der Zwischenzeit im Planetenträger 8. Zum einfacheren Handling der Bestandteile des Montagebolzens 32 sind dessen Teilstücke 33 bis 35 jeweils an einer Stirnseite mit einer Gewindebohrung 42 versehen, in welcher eine nicht dargestellte Augenschraube einschraubbar ist. Mit Hilfe der Augenschraube können die Bestandteile des Montagebolzen 32 problemlos bewegt und in die Planetenbuchse 23 eingesetzt werden.

Wird nur ein einziger Stift 36 mit einem kreisförmigen Querschnitt verwendet, besteht ungünstigerweise die Möglichkeit, dass sich das Lagerstück 34 um den Stift 36 herum dreht. Um dem entgegenzuwirken können zwei Stifte 36 vorgesehen werden, wodurch sich die Anzahl der Bohrungen 37, 38, 39, 40 in Bestandteilen des Montagebolzens 32 entsprechend verdoppelt.

**Tafel 1**

| Merkmal | Figur |
|---|---|
| 1 aa | 1 |
| 1 ab | 1 |
| 1 ac | 1 |
| 1 ad | 1 |
| 1 ae | 1 |
| 1 af | 1 |
| 1 ag | 1 |
| | |
| 1 ba | - |
| 1 bb | 2 b |
| 1 bc | 2 c |
| 1 bd | 2 d |
| 1 be | 2 e |
| 1 bf | - |
| 1 bg | 2 f |
| 1 bh | 2 g |
| 1 bi | 2 h |
| 1 bj | 2 i |
| 1 bk | - |
| 1 bl | 2 j |
| 1 bm | 2 k |
| 1 bn | 2 l |
| 1 bo | 2 m |

## Patentansprüche

1. Verfahren zum Austausch von Komponenten eines Umlaufrädergetriebes (1), welches insbesondere in einer Windkraftanlage eingesetzt ist, wobei das Umlaufrädergetriebe (1) folgende Merkmale aufweist:
aa) es umfasst eine Hauptachse (5);
ab) es umfasst ein Gehäuse (2), welches durch zwei Trennebenen (6a, 6b) in eine antriebsseitige (2a), in eine mittlere (2b) und in eine abtriebsseitige Sektion (2c) unterteilt ist, wobei die drei Sektionen (2a, 2b, 2c) des Gehäuses (2) entlang der Hauptachse (5) aufgereiht sind, und wobei das Gehäuse (2) in den Trennebenen (6a, 6b) auftrennbar ist;
ac) es umfasst einen Planetenträger (8), der in der antriebsseitigen Sektion (2a) des Gehäuses (2) um die Hauptachse (5) drehbar gelagert ist, und der mindestens einen Planetenbolzen (12) aufweist, welcher sich entlang einer zur Hauptachse (5) parallelen, planetenträgerfesten Planetenachse (13) erstreckt;
ad) es umfasst ein Hohlrad (16), welches gehäusefest in der mittleren Sektion (2b) des Gehäuses (2) koaxial zur Hauptachse (5) angeordnet ist;
ae) es umfasst ein Sonnenrad (19), welches in der abtriebsseitigen Sektion (2c) des Gehäuses (2) um die Hauptachse (5) drehbar gelagert ist;
af) es umfasst mindestens ein Planetenrad (15), welches auf dem Planetenbolzen (12) des Planetenträgers (8) drehbar gelagert ist und sowohl in einem ersten Zahneingriff (17) mit dem Hohlrad (16), als auch in einem zweiten Zahneingriff (18) mit dem Sonnenrad (19) kämmt;
ag) die antriebsseitige Sektion (2a) des Gehäuses (2) ist in einem Maschinenrahmen (4) gelagert;
und wobei das Verfahren **gekennzeichnet ist durch** die folgenden Schritte:
ba) Auftrennen des Gehäuses (2) in der Trennebene (6b) zwischen mittlerer Sektion (2b) und abtriebsseitiger Sektion (2c);
bb) Auseinanderführen von mittlerer Sektion (2b) und abtriebsseitiger Sektion (2c), sodass der zweite Zahneingriff (18) zwischen Planetenrad (15) und Sonnenrad (19) gelöst wird;
bc) Entfernen des Sonnenrades (19) aus dem Gehäuse (2);
bd) Parallelversetzen des Planetenrades (15) derart, dass der erste Zahneingriff (17) zwischen Planetenrad (15) und Hohlrad (16) gelöst wird;
be) Zusammenfügen von mittlerer Sektion (2b) und abtriebsseitiger Sektion (2c);
bf) Auftrennen des Gehäuses (2) in der Trennebene (6a) zwischen antriebsseitiger (2a) und mittlerer Sektion (2b);
bg) Auseinanderführen von antriebsseitiger (2a) und mittlerer Sektion (2c);
bh) Entfernen des Planetenrades (15);
bi) Einsetzen eines Austausch-Planetenrades (26), parallel versetzt zu der Planetenachse (13);
bj) Zusammenfügen von antriebsseitiger Sektion (2a) und mittlerer Sektion (2b);
bk) Auftrennen des Gehäuses (2) in der Trennebene (6b) zwischen abtriebsseitiger Sektion (2c) und mittlerer Sektion (2b);
bl) Auseinanderführen von abtriebsseitiger Sektion (2c) und mittlerer Sektion (2b);
bm) Wiederherstellen des ersten Zahneingriffs (17) zwischen Hohlrad (16) und Austausch-Planetenrad (26) **durch** Parallel versetzen des Austausch-Planetenrades (26) koaxial zur Planetenachse (13);
bn) Einsetzen eines Austausch-Sonnenrades (28) in das Gehäuse (2);
bo) Zusammenfügen von mittlerer Sektion (2b) und abtriebsseitiger Sektion (2c), sodass der zweite Zahneingriff (18) zwischen Austausch-Planetenrad (26) und Austausch-Sonnenrad (28) wiederhergestellt wird.

2. Verfahren nach Anspruch 1, **dadurch gekennzeichnet, dass** zwischen der abtriebsseitigen Sektion (2c) des Gehäuses (2) und dem Maschinenrahmen (4) eine Linearführung (22) angebracht wird, die sich parallel zur Hauptachse (5) erstreckt und entlang derer bei aufgetrenntem Gehäuse (2) die abtriebsseitige Sektion (2c) relativ zu dem Maschinenrahmen (4) beweglich ist.

3. Montagebolzen (32) zum Ausrichten eines Planetenrades (15) gegenüber einem Planetenträger (8),
a) mit einem Lagerstück (34), dem das Planetenrad (15) zuordbar ist und auf welchem das Planetenrad (15) lagerbar ist,
b) und mit mindestens einem Wangenstück (33), dem des Planetenträger (8) zuordbar ist und welches an dem Planetenträger (8) festsetzbar ist,
**dadurch gekennzeichnet,**
c) **dass** das Lagerstück (34) und das Wangenstück (33) zwei getrennte Bauteile sind,
d) **dass** das Wangenstück (33) mindestens eine axiale Wangen-Fluchtbohrung (38) und mindestens eine axiale Wangen-Exzenterbohrung (40) aufweist,
e) **dass** das Lagerstück (34) mindestens eine axiale Lager-Fluchtbohrung (37) und mindestens eine axiale Lager-Exzenterbohrung (39) aufweist.
f) und **dass** der Montagebolzen (32) mindestens einen Stift (36) umfasst, der durch die Bohrungen (37, 38, 39, 40) hindurchsteckbar ist,
g) wobei das Wangenstück (33) und das Lagerstück (34) miteinander fluchten, wenn der Stift (36) zugleich durch die Wangen-Fluchtbohrung (38) und die Lager-Fluchtbohrung (37) hindurchgesteckt ist,
h) und wobei das Wangenstück (33) und das Lagerstück (34) exzentrisch zueinander ausgerichtet sind, wenn der Stift (36) zugleich durch die Wangen-Exzenterbohrung (40) und die Lager-Exzenterbohrung (39) hindurchgesteckt ist.

4. Montagebolzen nach Anspruch 3, **dadurch gekennzeichnet, dass** das Wangenstück (33) und/oder das Lagerstück (34) eine auf einer Stirnfläche angeordnete Gewindebohrung (42) aufweist.

5. Montagebolzen nach Anspruch 3 oder 4, **gekennzeichnet durch** ein zweites Wangenstück (35).

6. Montagebolzen nach Anspruch 5, **dadurch gekennzeichnet, dass** das zweite Wangenstück (35) eine geringere axiale Stärke als das erste Wangenstück (33) aufweist.

7. Montagebolzen nach einem der Ansprüche 3 bis 6, **dadurch gekennzeichnet, dass** der Stift (36) endseitig mit einer Keilfläche (41) versehen ist.

8. Verwendung eines Montagebolzens (32) nach einem der Ansprüche 3 bis 7 in einem Verfahren nach einem der Ansprüche 1 oder 2.

## Claims

1. A method of replacing components of an epicyclic gear transmission (1) which is used in particular in a wind power installation, wherein the epicyclic gear transmission (1) comprises the following features:
aa) it includes a main axis (5);
ab) it includes a housing (2) which is subdivided by two separation planes (6a, 6b) into a drive-side section (2a), a central section (2b) and a driven-side section (2c), wherein the three sections (2a, 2b, 2c) of the housing (2) are arranged in a row along the main axis (5) and wherein the housing (2) is separable in the separation planes (6a, 6b);
ac) it includes a planet gear carrier (8) which is mounted in the drive-side section (2a) of the housing (2) rotatably about the main axis (5) and which has at least one planet gear pin (12) which extends along a planet gear axis (13) which is parallel to the main axis (5) and which is fixed relative to the planet gear carrier;
ad) it includes an annular gear (16) which is arranged fixedly in the housing in the central section (2b) of the housing (2) in coaxial relationship with the main axis (5);
ae) it includes a sun gear (19) which is mounted in the driven-side section (2c) of the housing (2) rotatably about the main axis (5);
af) it includes at least one planet gear (15) which is mounted rotatably on the planet gear pin (12) of the planet gear carrier (8) and which meshes both in a first tooth engagement (17) with the annular gear (16) and also in a second tooth engagement (18) with the sun gear (19);
ag) the drive-side section (2a) of the housing (2) is mounted in a machine frame (4);
and wherein the method is **characterised by** the following steps:
ba) dividing the housing (2) in the separation plane (6b) between the central section (2b) and the driven-side section (2c);
bb) moving the central section (2b) and the driven-side section (2c) apart so that the second tooth engagement (18) between the planet gear (15) and the sun gear (19) is released;
bc) removing the sun gear (19) from the housing (2);
bd) displacing the planet gear (15) in parallel relationship in such a way that the first tooth engagement (17) between the planet gear (15) and the annular gear (16) is released;
be) assembling the central section (2b) and the driven-side section (2c);
bf) dividing the housing (2) in the separation plane (6a) between the drive-side section (2a) and the central section (2b);
bg) moving the drive-side section (2a) and the central section (2c) apart;
bh) removing the planet gear (15);
bi) inserting a replacement planet gear (26) in parallel displaced relationship with the plant gear axis (13);
bj) assembling the drive-side section (2a) and the central section (2b);
bk) dividing the housing (2) in the separation plane (6b) between the driven-side section (2c) and the central section (2b);
bl) moving the driven-side section (2c) and the central section (2b) apart;
bm) restoring the first tooth engagement (17) between the annular gear (16) and the replacement planet gear (26) by parallel displacement of the replacement planet gear (26) in coaxial relationship with the planet gear axis (13);
bn) inserting a replacement sun gear (28) in the housing (2); and
bo) assembling the central section (2b) and the driven-side section (2c) so that the second tooth engagement (18) is restored between the replacement planet gear (6) and the replacement sun gear (28).

2. A method according to claim 1 **characterised in that** mounted between the driven-side section (2c) of the housing (2) and the machine frame (4) is a linear guide (22) which extends parallel to the main axis (5) and along which the driven-side section (2c) is movable relative to the machine frame (4) when the housing (2) is divided.

3. An assembly pin for alignment of a planet gear (15) with respect to a planet gear carrier (8)
a) comprising a bearing portion (34) with which the planet gear (15) can be associated and on which the plant gear (15) can be mounted,
b) and comprising at least one cheek portion (33) with which the planet gear carrier (8) can be associated and which can be fastened to the planet gear carrier (8),
**characterised in that**
c) the bearing portion (34) and the cheek portion (3) are two separate components,
d) the cheek portion (33) has at least one axial cheek alignment bore (38) and at least one axial cheek eccentric bore (40),
e) the bearing portion (34) has at least one axial bearing alignment bore (37) and at least one axial bearing eccentric bore (39),
f) and the assembly pin (32) includes at least one peg member (36) which can be pushed through the bores (37, 38, 39, 40),
g) wherein the cheek portion (33) and the bearing portion (34) are aligned with each other when the peg member (36) is pushed at the same time through the cheek alignment bore (38) and the bearing alignment bore (37),
h) and wherein the cheek portion (33) and the bearing portion (34) are oriented eccentrically relative to each other when the peg member (36) is pushed at the same time through the cheek eccentric bore (40) and the bearing eccentric bore (39).

4. An assembly pin according to claim 3 **characterised in that** the cheek portion (33) and/or the bearing portion (34) has a screwthreaded bore (42) arranged on an end face.

5. An assembly pin according to claim 3 or claim 4 **characterised by** a second cheek portion (35).

6. An assembly pin according to claim 5 **characterised in that** the second cheek portion (35) is of a smaller axial thickness than the first cheek portion (33).

7. An assembly pin according to one of claims 3 to 6 **characterised in that** the peg member (36) is provided with a taper surface (41) at the end.

8. Use of an assembly pin (32) according to one of claims 3 to 7 in a method according to one of claims 1 and 2.

## Revendications

1. Procédé d'échange de composants d'un engrenage planétaire (1), qui est utilisé en particulier dans une éolienne, où l'engrenage planétaire (1) présente les caractéristiques suivantes :
aa) il comprend un axe principal (5) ;
ab) il comprend un boîtier (2) qui est divisé par deux plans de séparation (6a, 6b) en une section côté menant (2a), une section médiane (2b) et une section côté mené (2c), où les trois sections (2a, 2b, 2c) du boîtier (2) sont disposées en rangée le long de l'axe principal (5), et où le boîtier (2) peut être séparé dans les plans de séparation (6a, 6b) ;
ac) il comprend une cage de transmission planétaire (8) qui est logée dans la section côté menant (2a) du boîtier (2) d'une manière tournante autour de l'axe principal (5), et qui présente au moins un boulon planétaire (12) qui s'étend le long d'un axe planétaire (13), parallèle à l'axe principal (5), solidaire de la cage de transmission planétaire ;
ad) il comprend une roue creuse (16) qui est disposée d'une manière solidaire avec le boîtier dans la section médiane (2b) du boîtier (2) coaxialement à l'axe principal (5) ;
ae) il comprend une roue solaire (19) qui est logée dans la section côté mené (2c) du boîtier (2) d'une manière tournante autour de l'axe principal (5) ;
af) il comprend au moins une roue planétaire (15), qui est logée d'une manière tournante sur le boulon planétaire (12) de la cage de transmission planétaire (8) et qui engrène à la fois avec une première denture (17) avec la roue creuse (16) et aussi avec une deuxième denture (18) avec la roue solaire (19) ;
ag) la section côté menant (2a) du boîtier (2) est logée dans un châssis de machine (4) ;
et où le procédé est **caractérisé par** les étapes consistant à :
ba) séparer le boîtier (2) dans le plan de séparation (6b) entre la section médiane (2b) et la section côté mené (2c) ;
bb) écarter la section médiane (2b) et la section côté mené (2c) de manière à relâcher le deuxième engrènement (18) entre la roue planétaire (15) et la roue solaire (19) ;
bc) retirer la roue solaire (19) du boîtier (2) ;
bd) décaler parallèlement la roue planétaire (15) de telle sorte que la première denture (17) entre la roue planétaire (15) et la roue creuse (16) est relâchée ;
be) assembler la section médiane (2b) et la section côté mené (2c) ;
bf) séparation du boîtier (2) dans le plan de séparation (6a) entre la section côté menant (2a) et la section médiane (2b) ;
bg) écarter la section côté menant (2a) et la section médiane (2c) ;
bh) retirer la roue planétaire (15) ;
bi) mettre en place une roue planétaire d'échange (26), décalée parallèlement à l'axe planétaire (13) ;
bj) assembler la section côté menant (2a) et la section médiane (2b) ;
bk) séparer le boîtier (2) dans le plan de séparation (6b) entre la section côté mené (2c) et la section médiane (2b) ;
bl) écarter la section côté mené (2c) et la section médiane (2b) ;
bm) rétablir le premier engrènement (17) entre la roue creuse (16) et la roue planétaire d'échange (26) par un décalage parallèle de la roue planétaire d'échange (26) coaxialement à l'axe planétaire (13) ;
bn) mettre en place une roue solaire d'échange (28) dans le boîtier (2) ;
bo) assembler la section médiane (2b) et la section côté mené (2c) de sorte que le deuxième engrènement (18) entre la roue planétaire d'échange (26) et la roue solaire d'échange (28) est rétabli.

2. Procédé selon la revendication 1, **caractérisé en ce que,** entre la section côté mené (2c) du boîtier (2) et le châssis de machine (4), un guidage linéaire (22) est installé qui s'étend parallèlement à l'axe principal (5) et le long de celui-ci, lorsque le boîtier (2) est séparé, la section côté mené (2c) est déplaçable relativement au châssis de machine (4).

3. Boulon de montage (32) pour l'orientation d'une roue planétaire (15) par rapport à une cage de transmission planétaire (8) ;
a) avec une pièce de palier (34) à laquelle la roue planétaire (15) peut être associée et sur laquelle la roue planétaire (15) peut être logée,
b) et avec au moins une pièce de joue (33) à laquelle la cage de transmission planétaire (8) peut être associée et qui peut être fixée sur la cage de transmission planétaire (8) ;
**caractérisé**
c) **en ce que** la pièce de palier (34) et la pièce de joue (33) sont deux composants séparés,
d) **en ce que** la pièce de joue (33) présente au moins un perçage aligné axial de joue (38) et au moins un perçage excentrique axial de joue (40),
e) **en ce que** la pièce de palier (34) présente au moins un perçage aligné axial de palier (37) et au moins un perçage excentrique axial de palier (39),
f) et **en ce que** le boulon de montage (32) comprend au moins une tige (36) qui peut être insérée à travers les perçages (37, 38, 39, 40),
g) où la pièce de joue (33) et la pièce de palier (34) sont alignées lorsque la tige (36) est introduite à la fois à travers le perçage aligné de joue (38) et le perçage aligné de palier (37),
h) et où la pièce de joue (33) et la pièce de palier (34) sont orientées d'une manière excentrique l'une relativement à l'autre lorsque la tige (36) est insérée en même temps à travers le perçage excentrique de joue (40) et le perçage excentrique de palier (39).

4. Boulon de montage selon la revendication 3, **caractérisé en ce que** la pièce de joue (33) et/ou la pièce de palier (34) présente un taraudage (42) ménagé sur une face frontale.

5. Boulon de montage selon la revendication 3 ou 4, **caractérisé par** une deuxième pièce de joue (35).

6. Boulon de montage selon la revendication 5, **caractérisé en ce que** la deuxième pièce de joue (35) présente une épaisseur axiale plus petite que la première pièce de joue (33).

7. Boulon de montage selon l'une des revendications 3 à 6, **caractérisé en ce que** la tige (36) présente, côté extrémité, une face de coin (41).

8. Utilisation d'un boulon de montage (32) selon l'une des revendications 3 à 7 dans un procédé selon l'une des revendications 1 ou 2.
